# EUROPÄISCHE PATENTSCHRIFT

(11) **EP 4 449 951 B1**
(45) Veröffentlichungstag und Bekanntmachung des Hinweises auf die Patenterteilung: **22.07.2026**
(21) Anmeldenummer: 24000046.3
(22) Anmeldetag: 18.04.2024
(51) Int. Cl.: A47C 19/00, B60P 3/39, F16B 2/12, F16B 7/04

(54) **GESTELL MIT EINEM KLEMMMECHANISMUS UND VERFAHREN ZUM VERBINDEN VON ZUMINDEST ZWEL PROFILEN MITTELS EINES KLEMMMECHANISMUS**
FRAME WITH CLAMPING MECHANISM AND METHOD FOR JOINING AT LEAST TWO PROFILES BY MEANS OF A CLAMPING MECHANISM
CHÂSSIS AVEC UN MÉCANISME DE SERRAGE ET PROCÉDÉ POUR RELIER AU MOINS UN PROFILÉ EN ACCORDÉON À L'AIDE D'UN MÉCANISME DE SERRAGE

(30) Priorität: 19.04.2023 DE 102023001543
(43) Veröffentlichungstag der Anmeldung: 23.10.2024
(73) Patentinhaber: Kramer, Moses, 50674 Köln (DE)
(72) Erfinder: Kramer, Moses, 50674 Köln (DE)

(56) Entgegenhaltungen:
- WO-A2-2013/185747
- CA-A- 964 833
- CN-A- 112 355 612
- US-A- 5 074 094
- US-A1- 2018 335 062
- US-B1- 7 690 058

## Beschreibung

Die Erfindung betrifft ein Gestell mit mehreren Profilen und zumindest einem Klemmmechanismus zum Klemmen von zumindest einem der Profile. Speziell betrifft die Erfindung ein Bettgestell mit mehreren Profilen und zumindest einen Klemmmechanismus zum Klemmen von zumindest einem der Profile.

Allgemein sind Gestelle bekannt, die mehrere Profile umfassen. Sie dienen zur Ablage oder Aufnahme von Gegenständen, Lebewesen oder Medien und übertragen die Lasten, die durch die Gegenstände, Lebewesen oder Medien verursacht werden. Solche Gestelle werden z.B. dazu eingesetzt, um ein temporäres Bettgestell zu errichten.

Zum Errichten des Gestells müssen die Profile so miteinander verbunden werden, dass die bei der Verwendung des Gestells entstehenden Kräfte zwischen den Profilen übertragen werden können. Dazu eignet sich insbesondere bei temporären Aufbauten die Verwendung eines lösbaren Klemmmechanismus, da er den Errichtenden ein großes Maß an Flexibilität hinsichtlich der Verwendung der Profile, aus denen das Gestell gebildet wird, gibt. Außerdem weisen die Einzelteile des Gestells so im demontierten Zustand ein geringeres Packmaß auf.

Die Klemmmechanismen nach dem Stand der Technik wirken durch ein Zusammenspiel von Kraft- und Formschluss. Ein oder mehrere Klemmelemente aus Blech, die durch gebogene Flansche der äußeren Gestaltung des jeweiligen Profils nachempfunden sind, werden an der Stelle angebracht, an der die Profile verbunden werden sollen. Die Profile werden anschließend mit den Klemmelementen und mindestens einer Durchsteckverbindung mit einer Schraube geklemmt.

Solange die Schraube nicht angezogen ist, können sich die Profile, da die Klemmelemente zur Sicherstellung der Montierbarkeit auf dem jeweiligen Profil in ihrer Form so gestaltet sind, dass sie ein Spiel, bezogen auf die äußeren Abmaße der Profile besitzen, solange relativ zu den Klemmelementen bewegen, bis die Freiheitsgrade der Profile durch Formschluss zwischen dem Klemmelementen und dem jeweiligen Profil eingeschränkt werden. Das Profil besitzt also keine Lage relativ zu den Klemmelementen, in der alle Freiheitsgrade eingeschränkt sind.

Diese Einschränkung der Freiheitsgrade ist allerdings gewünscht und erfolgt bei den Klemmmechanismen nach dem Stand der Technik durch Betätigung eines Spannelementes in Form des Anziehens der Schraube. Diese stellt eine kraft- und formschlüssige Verbindung in Form einer Zweipunkt-Klemmung her.

Die Profile können sich solange nicht bewegen, solange der von der Schraube erzeugte Reibschluss in der Lage ist die auftretenden Kräfte zu übertragen.

Tritt eine Kraft auf, die den Reibschluss überwinden kann, sind die Profile in Richtung der Schraube aufgrund des Formschlusses unbeweglich. Da es sich allerdings nur um eine Zweipunkt-Klemmung handelt und das Klemmelement, wie zuvor beschrieben, Spiel zum Profil aufweist, ist dieses dann solange relativ zum Klemmelement beweglich, bis die Kraft durch Formschluss mit dem Klemmelement übertragen werden kann.

Dieses Verhalten kann insbesondere dann auftreten, wenn der resultierende Reibschluss z.B. durch Handbetätigung der Schraube nicht groß genug ist, um die auftretenden Kräfte zu übertragen. Handelt es sich um eine wechselnde Last, bewegt sich das Profil zwischen Positionen, in denen Formschluss mit dem Klemmelement herrscht hin und her.

Nachteilig an diesem Verhalten ist das dieses, als "Kippeln" war genommene, vom Benutzer als instabil empfunden werden kann und Verschleiß auf Grund der Relativbewegung des Profils und des Klemmelements auftreten kann.

Das Dokument US 2018/335062 A1 zeigt ein Gestell aus dem Stand der Technik.

Es ist eine Aufgabe der Erfindung, ein Gestell aus mehreren Profilen bereitzustellen, welches auf einfache Weise, insbesondere werkzeuglos, durch Verbinden der Profile mit einem Klemmmechanismus zusammengebaut werden kann und dennoch eine stabile Verbindung von zumindest zwei Profilen, wobei zumindest ein Profil in zumindest einer, hinsichtlich der Haupterstreckungsachse des zumindest einen Profils senkrecht stehenden, Ebene spielfrei geklemmt ist zu ermöglichen, wobei der Klemmmechanismus einen geringen Bauraum um das spielfrei geklemmte Profil einnimmt und insbesondere so gestaltet ist, dass ein vorhandener Hohlraum des spielfrei geklemmten Profils vollständig als Bauraum zur Aufnahme von z.B. teleskopisch in dem spielfrei geklemmten Profil gelagerten Profilen zur Verfügung steht und insbesondere so gestaltet ist, dass die Verbindung der Profile mit dem Klemmmechanismus an mehreren Positionen erfolgen kann, wobei das Einlegen des spielfrei geklemmten Profils in den Klemmmechanismus insbesondere aus radialer Richtung des spielfrei geklemmten Profils erfolgen kann.

Mit anderen Worten ermöglicht die Erfindung das simple und flexible Verbinden von Profilen zu einem Gestell und verhindert durch das spielfreie Klemmen des einen Profils das Kippeln des spielfrei geklemmten Profils bei wechselnden Lasten. Gleichzeitig nimmt der Klemmmechanismus einen geringen Bauraum um das spielfrei geklemmte Profil ein und ermöglicht es insbesondere einen Hohlraum des spielfrei geklemmten Profils zur Aufnahme von teleskopisch in dem spielfrei gelagerten Profil angeordneten Profilen zu nutzen.

Es ist eine weitere Aufgabe der Erfindung, ein Verfahren zu definieren, welches es dem Benutzer erlaubt, mehrere Profile durch Bedienen eines Klemmmechanismus auf eine einfache Weise zu verbinden, wobei das Verfahren es dem Anwender ermöglicht, den Klemmmechanismus auf eine leicht verständliche Weise so zu bedienen, dass zumindest ein Profil in zumindest einer, hinsichtlich der Haupterstreckungsachse des zumindest einen Profils senkrecht stehenden, Ebene spielfrei geklemmt wird.

Die Aufgabe wird gelöst durch ein Gestell mit den Merkmalen des Anspruchs 1 und insbesondere dadurch, dass das Gestell, insbesondere Bettgestell, zumindest einen Klemmmechanismus zum Klemmen von zumindest einem der Profile umfasst, wobei der Klemmmechanismus eine erste Klemmeinheit zur Klemmung des zumindest einen Profils in einer ersten Wirkrichtung umfasst und eine zweite Klemmeinheit zur Klemmung des zumindest einen Profils in einer, schräg, insbesondere senkrecht, zur ersten Wirkrichtung ausgerichteten zweiten Wirkrichtung umfasst, wobei die erste Klemmeinheit und die zweite Klemmeinheit jeweils zwischen einer Klemmstellung und einer Freigabestellung verstellbar sind, wobei der Klemmmechanismus ein Verstellelement umfasst, über das die erste Klemmeinheit und die zweite Klemmeinheit in ihre jeweilige Klemmstellung verstellbar sind.

Durch die klare Abgrenzung der beiden Klemmungen beeinflusst der Benutzer jeweils nur die Klemmung in eine Richtung und kann bewusst Einfluss auf die Stärke der Klemmung nehmen, ohne dass es zu Wechselwirkungen der beiden Klemmeinheiten kommt. Diese Vorgehensweise verringert zudem den Aufwand für die Mon- bzw. Demontage des Gestells.

Als Wirkrichtung einer Klemmeinheit wird eine Gerade verstanden, zu der die Kraftvektoren der entsprechenden oder jeweiligen Klemmkräfte der Klemmeinheit parallel angeordnet sind. Profile im Sinne dieser Offenbarung sind längliche Körper mit vorzugsweise entlang ihrer Längserstreckung konstantem Querschnitt. Die Profile können vorzugsweise hohl ausgeführt sein. Beispielsweise können die Profile aus einem strangpressbaren Werkstoff bestehen und vorzugsweise mittels eines Strangpressverfahrens hergestellt sein. Es wäre ebenfalls denkbar einen Kunststoff oder Faserverbundwerkstoff zur Herstellung der Profile einzusetzen.

Die Erfindung beruht auf dem Gedanken, dass eine stabilere und mit weniger Spiel behaftete Verbindung zwischen dem Klemmmechanismus und dem Profil erzeugt wird, wenn der Klemmmechanismus zwei Klemmeinheiten d.h. zwei Paare von entgegengesetzt ausgerichteten Klemmflächen aufweist, welche das Profil durch die jeweilige Klemmung in unterschiedlichen Richtungen fixiert. Hierdurch wird das Profil im geklemmten Zustand entlang seines gesamten Umfangs formschlüssig in radialer Richtung gehalten. In anderen Worten wird das Profil so formschlüssig geklemmt, dass es keine Freiheitsgrade in einer senkrecht zu Haupterstreckungsrichtung des Profils angeordneten Ebene besitzt.

Eine radiale Richtung eines Profils im Sinne dieser Offenbarung ist senkrecht zur Haupterstreckungsachse des Profils ausgerichtet.

Vorteilhafte Ausführungsformen der Erfindung sind den Unteransprüchen, der Beschreibung sowie den Zeichnungen zu entnehmen.

Gemäß einer Ausführungsform weist das Verstellelement eine axiale Haupterstreckungsrichtung auf, welche in Richtung der zweiten Wirkrichtung ausgerichtet ist.

Die axiale Haupterstreckungsrichtung ist vorzugsweise größer als eine Breite und Höhe bzw. ein Durchmesser des Verstellelements.

Das Verstellelement ist vorzugsweise als zylinderförmig ausgebildet.

Gemäß einer Ausführungsform umfasst der Klemmmechanismus eine Umlenkeinheit, welche eine Bewegung des Verstellelements, beispielsweise eine Rotationsbewegung oder axiale Bewegung des Verstellelements in eine Bewegung in Richtung der ersten Wirkrichtung umwandelt.

Gemäß einer Ausführungsform weist das Verstellelement zumindest ein Gewinde, insbesondere Außengewinde, auf. Das Gewinde kann mit einem korrespondierenden Gewinde, insbesondere Innengewinde, zumindest eines Verdrängungselements formschlüssig in Eingriff stehen.

Es wäre ebenfalls denkbar, dass das Verstellelement zwei gegenläufige Außengewinde aufweist.

Gemäß einer Ausführungsform steht das Verdrängungselement mit einem Klemmelement in Wirkverbindung. Durch eine Bewegung des Verdrängungselements entlang einer axialen Haupterstreckungsrichtung des Verstellelements kann das Klemmelement in Richtung der ersten Wirkrichtung bewegbar sein.

Gemäß einer Ausführungsform weist das Verdrängungselement eine erste Schrägfläche auf. Das Klemmelement kann eine zweite Schrägfläche aufweisen. Die erste Schrägfläche und die zweite Schrägfläche können derart angeordnet sein, dass die erste Schrägfläche und die zweite Schrägfläche aufeinander abgleiten, während das Klemmelement in Richtung der ersten Wirkrichtung bewegt wird.

Gemäß einer Ausführungsform ist das Verstellelement mittels eines ersten Betätigungselements bewegbar, insbesondere rotierbar. Hierdurch kann die erste Klemmeinheit in ihre Klemmstellung verstellbar sein. Das erste Betätigungselement oder ein zweites Betätigungselement kann relativ zu dem Verstellelement bewegbar sein, um die zweite Klemmeinheit in ihre Klemmstellung zu verstellen.

Vorzugsweise weist die erste Klemmeinheit zumindest ein Klemmelement auf. Die erste Klemmeinheit kann mehrere Klemmelemente umfassen. Bevorzugt umfasst die erste Klemmeinheit genau drei Klemmelemente.

Gemäß einer Ausführungsform weist der Klemmmechanismus zwei Spannelemente auf, deren Abstand vorzugsweise über eine Mutter oder einen Exzenter reduzierbar ist, um die zweite Klemmeinheit in ihre Klemmstellung zu versetzen.

Gemäß einer Ausführungsform weist der Klemmmechanismus Spannflächen auf, deren Abstand, vorzugsweise über eine Mutter oder einen Exzenter, verkürzbar ist, um die zweite Klemmeinheit in ihre Klemmstellung zu versetzen.

Gemäß einer Ausführungsform kann die zweite Klemmeinheit zumindest ein Klemmelement aufweisen, bevorzugt weist die zweite Klemmeinheit genau zwei separate Klemmelemente auf. Vorzugsweise bilden zwei Klemmelemente der ersten Klemmeinheit auch Klemmelemente der zweiten Klemmeinheit.

Die Verwendung von zwei separaten Klemmelementen hat den Vorteil, dass die Klemmeinheit so verstellt und geöffnet werden kann, dass das Einlegen des Profils in die Klemmeinheit aus radialer Richtung erfolgen kann und nicht durch ein axiales Einschieben in die Klemmeinheit erfolgen muss.

Diese Gestaltung ermöglicht beispielsweise eine Anordnung des Klemmmechanismus an eine geschlossene Rahmenkonstruktion.

Vorzugsweise ist das zumindest eine Betätigungselement werkzeuglos betätigbar. Hierdurch kann der Klemmmechanismus auf einfache Weise ohne Werkzeug, wie z.B. einen Inbusschlüssel, betätigt werden.

Die Erfindung betrifft zudem ein Verfahren zum Verbinden von zumindest zwei Profilen mittels eines Klemmmechanismus mit den Schritten:
- Einlegen des zumindest einen Profils in den Klemmmechanismus,
- Verstellen einer ersten Klemmeinheit mittels eines Verstellelements, um das zumindest eine Profil in einer ersten Wirkrichtung zu klemmen, und
- Reduzieren eines Abstands von mit dem Verstellelement verbundenen Spannelementen, um das zumindest eine Profil mittels einer zweiten Klemmeinheit entlang einer zweiten, schräg, insbesondere senkrecht, zu der ersten Wirkrichtung angeordneten, Wirkrichtung zu klemmen.

Der zur Durchführung genutzte Klemmmechanismus kann eines oder mehrere der zuvor oder nachstehend beschriebenen Merkmale aufweisen.

Mit anderen Worten erlaubt das Verfahren es dem Benutzer, die Profile über zwei mit einem zentralen Verstellelement in Verbindung stehenden Klemmeinheiten auf eine leicht verständliche und zu bedienende Weise stabil miteinander zu verbinden, wobei zumindest ein Profil spielfrei geklemmt ist. Durch die klare Abgrenzung der beiden Klemmungen beeinflusst der Benutzer jeweils nur die Klemmung in eine Richtung und kann bewusst Einfluss auf die Stärke der Klemmung nehmen, ohne dass es zu Wechselwirkungen der beiden Klemmeinheiten kommt. Diese Vorgehensweise verringert zudem den Aufwand für die Mon- bzw. Demontage des Gestells.

Gemäß einer Ausführungsform handelt es sich bei dem Verfahren zum Verbinden von zumindest zwei Profilen mittels eines Klemmmechanismus um ein Verfahren zum Verbinden von zumindest zwei Profilen eines Gestells, insbesondere Bettgestells.

Gemäß einer Ausführungsform des Verfahrens weist das Verstellelement zumindest ein Gewinde, insbesondere Außengewinde, auf und das Verstellen der ersten Klemmeinheit kann ein Drehen des Verstellelements um seine Längsachse umfassen. Das zumindest eine Gewinde des Verstellelements kann mit einem korrespondierenden Gewinde, insbesondere Innengewinde, zumindest eines Verdrängungselements formschlüssig in Eingriff stehen. Durch das Drehen des Verstellelements um seine Längsachse kann ein Bewegen des Verdrängungselements entlang der axialen Haupterstreckungsrichtung des Verstellelements bewirkt werden.

Dies ermöglicht eine einfache und kraftschonende Betätigung der ersten Klemmeinheit.

Gemäß einer Ausführungsform des Verfahrens bewirkt das Bewegen des Verdrängungselementes entlang der axialen Haupterstreckungsrichtung des Verstellelements eine Bewegung eines Klemmelements in Richtung der ersten Wirkrichtung.

Gemäß einer Ausführungsform des Verfahrens umfasst das Verstellen der ersten Klemmeinheit, um die erste Klemmeinheit in ihre Klemmstellung zu verstellen, ein Bewegen, insbesondere Rotieren, des Verstellelements mittels eines ersten Betätigungselements.

Gemäß einer Ausführungsform des Verfahrens wird die erste Klemmeinheit durch ein Bewegen, insbesondere Rotieren, des Verstellelements mittels eines ersten Betätigungselements und die zweite Klemmeinheit durch Verkürzen des Abstands der Spannelemente, durch eine Bewegung des ersten Betätigungselements oder eines zweiten Betätigungselements in ihre Klemmstellung verstellt.

Gemäß einer Ausführungsform des Verfahrens wird die Reduktion des Abstands der Spannelemente über eine Rotation einer Mutter oder ein Verschwenken eines Exzenters durchgeführt.

### Figurenbeschreibung

Nachfolgend wird die Erfindung anhand von mehreren Ausführungsformen näher beschrieben, die jedoch nur beispielhaft, nicht aber einschränkend aufzufassen sein sollen.

Es zeigen:
**Fig.** 1: Perspektivische Ansicht eines erfindungsgemäßen Gestells
**Fig.** 2: Perspektivische Ansicht eines in einen PKW eingebauten Gestells
**Fig.** 3a: Ausschnitt eines erfindungsgemäßen Gestells mit einem ersten Ausführungsbeispiel des Klemmmechanismus in perspektivischer Ansicht
**Fig.** 3b: Explosionsansicht des in **Fig.** 3a dargestellten Klemmmechanismus
**Fig.** 3c: Schnittdarstellung der **Fig** 3a.
**Fig.** 3d: Geschnittene perspektivische Ansicht der ersten Klemmeinheit des in **Fig.** 3b dargestellten Klemmmechanismus
**Fig.** 3e: Perspektivische Ansicht der zweiten Klemmeinheit des in **Fig.** 3b dargestellten Klemmmechanismus
**Fig.** 3f: Perspektivische Ansicht der Umlenkeinheit des in **Fig.** 3b dargestellten Klemmmechanismus
**Fig.** 4: Einen Halbschnitt eines Ausschnittes eines erfindungsgemäßen Gestells mit einem zweiten Ausführungsbeispiel des Klemmmechanismus
**Fig.** 5a: Einen Halbschnitt eines Ausschnittes eines erfindungsgemäßen Gestells mit einem dritten Ausführungsbeispiel des Klemmmechanismus
**Fig.** 5b: Explosionsansicht des in **Fig.** 5a dargestellten Klemmmechanismus
**Fig.** 6a: Einen Ausschnitt eines erfindungsgemäßen Gestells mit einem vierten Ausführungsbeispiel des Klemmmechanismus in perspektivischer Ansicht
**Fig.** 6b: Schnittdarstellung der **Fig.** 6a
**Fig.** 7a: Einen Ausschnitt eines erfindungsgemäßen Gestells mit einem fünften Ausführungsbeispiel des Klemmmechanismus in perspektivischer Ansicht
**Fig.** 7b: Seitenansicht des in **Fig.** 7a dargestellten Ausschnitts des Gestells
**Fig.** 7c: Schnittdarstellung der **Fig.** 7b

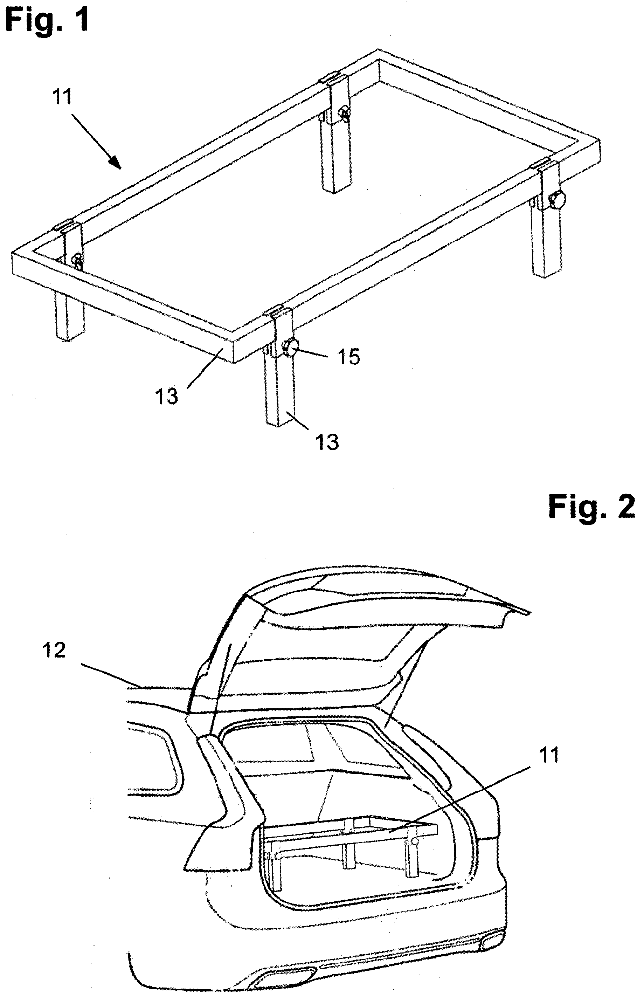

**Fig.** 1 zeigt eine perspektivische Ansicht eines erfindungsgemäßen Gestells **11.** Das Gestell **11** besteht aus einem Verbund mehrerer rechteckiger stranggepresster Aluminium-Hohlprofile **13** und einem ebenfalls aus rechteckigen stranggepressten Aluminium-Hohlprofilen bestehenden verschweißten Rahmen **13.** Die Anbindung der rechteckigen Hohlprofile **13** erfolgt mit je einem Klemmmechanismus **15.**

**Fig.** 2 zeigt eine perspektivische Ansicht eines in den Kofferraum eines Fortbewegungsmittels **12** (PKW) eingebauten, Gestells **11.** Das Gestell **11** ist so im Kofferraum des Fortbewegungsmittels platziert worden, dass der Transport des Gestells **11** bei geschlossener Kofferraumklappe erfolgen kann.

### Variante 1: Klemmmechanismus mit drei Klemmelementen und einem Verdrängungselement:

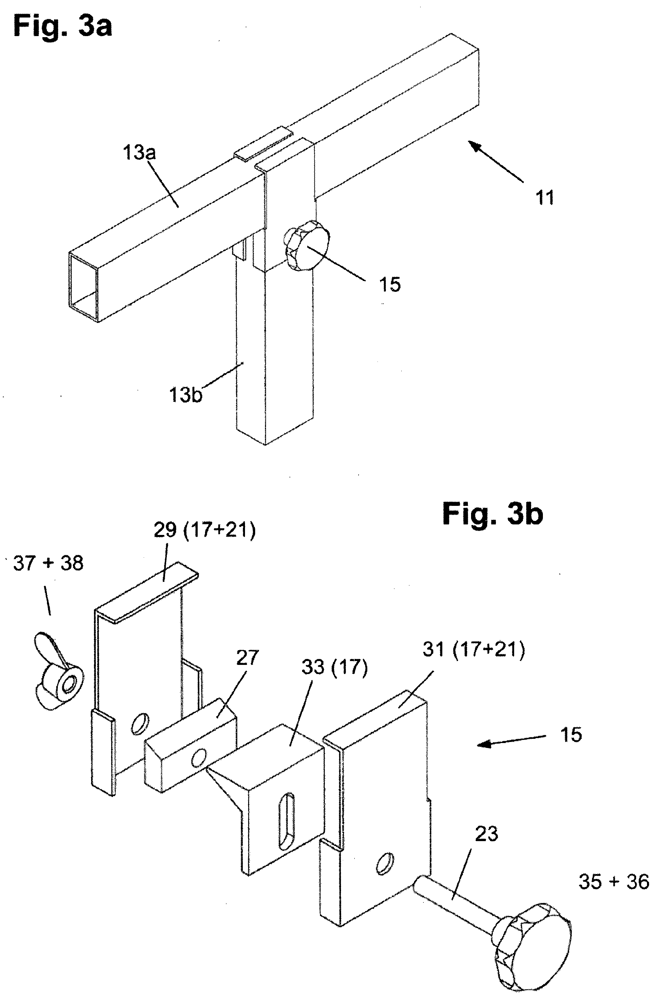

**Fig.** 3a zeigt einen Ausschnitt eines erfindungsgemäßen Gestells **11** mit einem ersten Ausfiihrungsbeispiel des Klemmmechanismus **15** in perspektivischer Ansicht. Das Gestell **11** wird durch den Verbund von rechteckigen stranggepressten Hohlprofilen **13a,13b** aus Aluminium gebildet.

Der Klemmmechanismus **15** nach den **Fig.** 3a**-****Fig.** 3f klemmt je zwei rechteckige Profile **13a,13b,** die als stranggepresste Hohlprofile ausgeformt und Teil eines Gestells **11** sind.

**Fig.** 3b zeigt eine Explosionsansicht des Klemmmechanismus **15.** Er besteht aus auf der Haupterstreckungsachse eines Verstellelements **23** angeordneten Elementen **27,29,33,31,35,36,37,38.**

Das Verstellelement **23** ist in dieser Ausführungsform das Gewinde einer Sterngriffschraube, die durch die Betätigung des als Sterngriff ausgeformten, formschlüssig mit dem Gewinde verbundenen ersten Betätigungselements **35** um die Haupterstreckungsachse rotiert werden kann. Auf seiner Achse sind zwei aus Blech gefertigte Klemmelemente **29,31,** in die je eine parallel zur Oberkante des oberen Profils **13b** orientierte, sowie zwei parallel zu den Seitenflächen des unteren Profils **13a** orientierte Laschen ausgeformt sind, spiegelsymmetrisch zueinander ausgerichtet. Die Laschen schränken die Beweglichkeit der Profile **13a,13b,** wenn die erste Klemmeinheit **17** sich in ihrer Klemmstellung befindet, ein. In den Klemmelementen **29,31** ist je eine Bohrung eingebracht, durch die das Gewinde des Verstellelements **23** geführt wird. Zwischen den beiden Klemmelementen **29,31** liegt ein aus Stahl gefertigtes Verdrängungselement **27,** das über eine Gewindebohrung mit dem Gewinde des Verstellelements **23** verbunden ist und eine zur Haupterstreckungsachse des Verstellelements **23** geneigte Schrägfläche aufweist. Eine entsprechende Schrägfläche ist in dem per Spritzguss hergestellten und ebenfalls zwischen den Klemmelementen **29,31** liegenden Klemmelement **33** ausgeformt. Dieses weist ein Langloch, durch das das Gewinde des Verstellelements **23** geführt ist, welches in Richtung der oberen Flansche der Klemmelemente **29,31** verläuft und senkrecht auf der Haupterstreckungsachse des Verstellelements **23** steht und eine zur Stirnseite des unteren Profils **13a** parallel verlaufende obere Fläche auf. Auf der gegenüberliegenden Seite des ersten Betätigungselements **35** ist ein zweites Betätigungselement **37** in Form einer Flügelmutter auf dem Gewinde des Verstellelements **23** angeordnet.

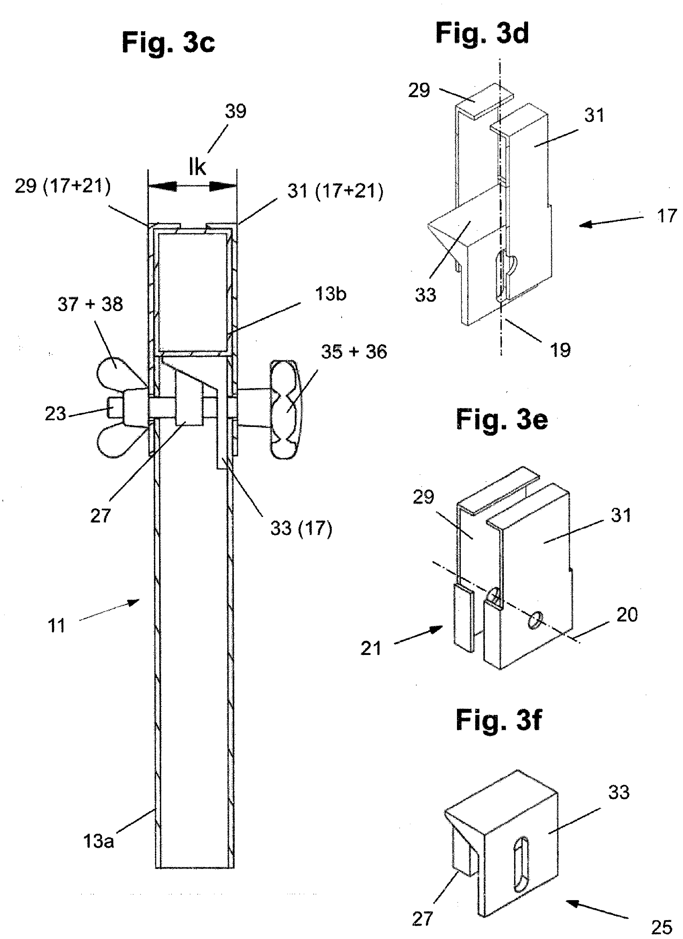

**Fig.** 3c zeigt eine Schnittdarstellung der **Fig.** 3a. Es ist ersichtlich, dass das untere Profil **13a** im Endbereich zwei Bohrungen aufweist, welche koaxial zur Haupterstreckungsachse des Verstellelements **23** angeordnet sind. Diese Anordnung ermöglicht es, dass der Klemmmechanismus **15** für das Einlegen des oberen Profils **13b** sowie den Zustand, in dem die Profile **13a,13b** nicht zu einem Gestell **11** verbunden sind, auf dem unteren Profil **13a** montiert bleiben kann, ohne dass er in seine Einzelkomponenten zerlegt werden muss.

Die Klemmung des oberen Profils **13b** in eine erste Wirkrichtung **19** erfolgt durch Betätigung der ersten Klemmeinheit **17,** siehe **Fig.** 3d, und der Umlenkeinheit **25,** siehe **Fig.** 3f, durch das Rotieren des Verstellelements **23** in eine Richtung. Das Verdrängungselement **27** bewegt sich, durch die Rotation, auf das erste Betätigungselement **35** zu und verdrängt so das über die Schrägflächen mit dem Verdrängungselement **27** in Verbindung stehende Klemmelement **33** entlang der ersten Wirkrichtung **19** so lange nach oben, bis sich ein Formschluss zwischen den oberen Flanschen der Klemmelemente **29,31** und dem oberen Profil **13b** sowie ein Formschluss zwischen der oberen Fläche des Klemmelements **33** und der unteren Anlagefläche des oberen Profils **13b** einstellt.

Die Klemmung des oberen Profils **13b** und des unteren Profils **13a** in einer zweiten Wirkrichtung **20** erfolgt durch die zweite Klemmeinheit **21,** siehe **Fig.** 3f. Durch die Rotation des zweiten Betätigungselements **37** wird der Abstand **39** zwischen den Spannelementen **36,38,** die in dieser Ausführungsform den Betätigungselementen **35,37** entsprechen, reduziert. Dadurch bewegen sich die Klemmelemente **29,31** solange, bis sich ein Formschluss zwischen den Innenflächen der Klemmelemente **29,31** und den jeweiligen Außenflächen der Profile **13a,13b** einstellt.

### Variante 2: Klemmmechanismus mit drei Klemmelementen und zwei Verdrängungselementen.

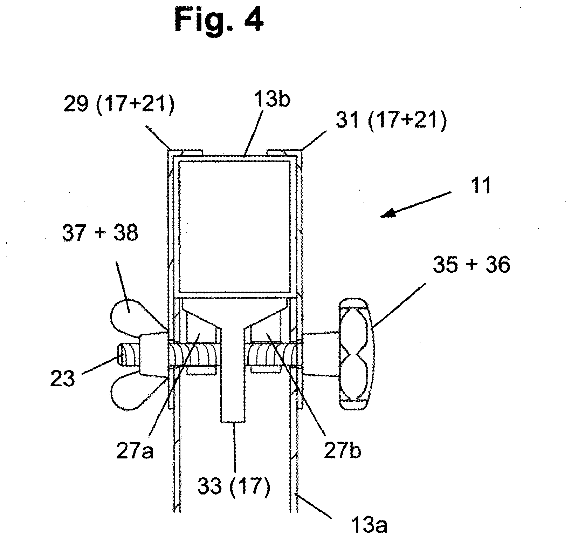

Der Klemmmechanismus **15** in der Ausführungsform nach **Fig.** 4 ist eine Variation des Klemmmechanismus **15** nach **Fig.** 3a**-****Fig.** 3f, bei der eine anders ausgeführte Umlenkeinheit **25** und ein anders ausgeführtes Verstellelement **23** zum Einsatz kommen.

Die Umlenkeinheit **25** besteht aus zwei auf dem Verstellelement **23** angeordneten Verdrängungselementen **27a,27b** und einem Klemmelement (**33**). Die Verdrängungselemente **27a,27b** sind aus Stahl gefertigt, weisen eine zur Haupterstreckungsachse des Verstellelements **23** geneigte Schrägfläche auf, sind über je eine Gewindebohrung mit dem Gewinde des Verstellelements **23** verbunden und spiegelsymmetrisch zueinander angeordnet.

Das Verstellelement **23** ist eine gegenläufige Gewindespindel, auf der die Verdrängungselemente **27a,27b** so angeordnet sind, dass sie sich durch Rotation des formschlüssig mit dem Verstellelement **23** verbundenen, als Sterngriff ausgeformten ersten Betätigungselements **35** aufeinander zu- / voneinander wegbewegt werden können. Zwischen den beiden Verdrängungselementen **27a,27b** ist das im Spritzgussverfahren hergestellte Klemmelement **33** angeordnet. Dieses weist zwei den Schrägflächen der Verdrängungselementen **27a,27b** entsprechende Schrägflächen sowie eine zur Stirnseite des unteren Profils **13a** parallel verlaufende obere Fläche auf und ist durch ein Langloch formschlüssig auf dem Verstellelement **23** angeordnet. Das Langloch verläuft in Richtung der oberen Flansche der Klemmelemente **29,31** und steht senkrecht auf der Haupterstreckungsachse des Verstellelements **23.**

Die Klemmung der Profile erfolgt wie für die in **Fig.** 3a-**Fig**. 3f dargestellte Ausführungsform beschrieben. Durch die alternative Gestaltung des Umlenkeinheit **25** kann die Klemmung des oberen Profils **13b** mit der ersten Klemmeinheit **17** allerdings mit einem geringeren Kraftaufwand erreicht werden, als bei der in **Fig.** 3a-**Fig.** 3f dargestellten Ausführungsform.

### Variante 3: Klemmmechanismus mit nach unten wirkendem Klemmelement

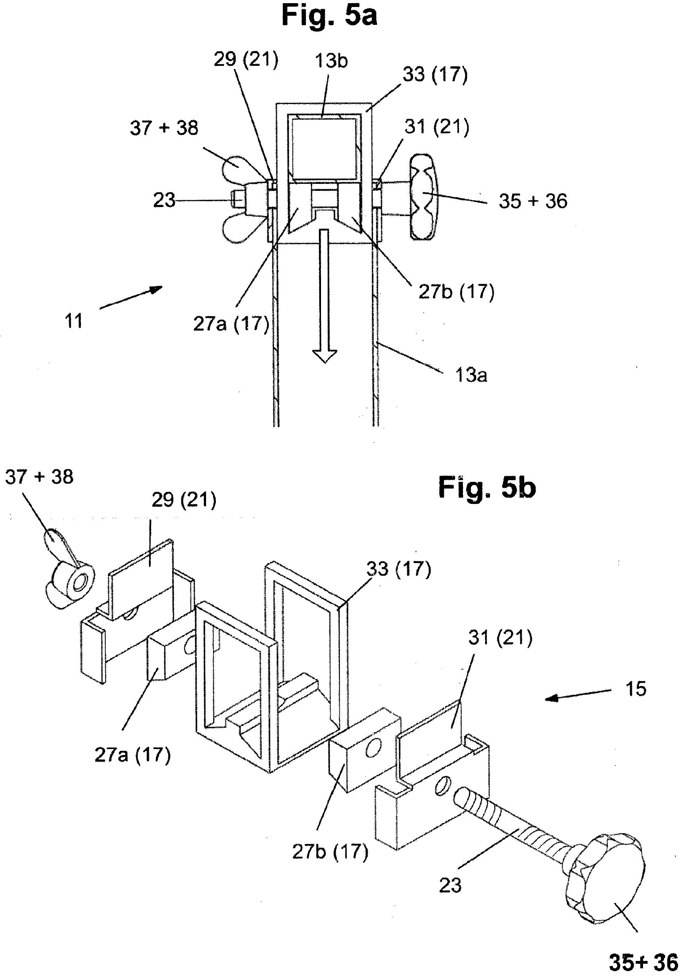

In den **Fig.** 5a und 5b ist eine Variation der in **Fig.** 4 dargestellten Ausführungsform des Klemmmechanismus **15** dargestellt, bei der ein anders ausgeführtes Klemmelement **33** zum Einsatz kommt.

Das Klemmelement **33** weist zwei gegenläufige Schrägflächen und zwei Klemmbügel auf. Die Schrägflächen und die Verdrängungselemente **27** sind in diesem Ausführungsbeispiel so angeordnet, dass die Klemmung der ersten Klemmeinheit **17** durch eine entlang der ersten Wirkrichtung **19** nach unten gerichtete Bewegung erfolgt. In anderen Worten werden die Schrägflächen des Klemmelements **33** von den Schrägflächen der Verdrängungselemente **27** weggedrückt und die resultierende nach unten gerichtete Bewegung des Klemmelements **33** führt zum Klemmen des Profils **13b** entlang der ersten Wirkrichtung. Durch die ausgeformten Klemmbügel des Klemmelements **33** entfällt die Notwendigkeit der in den **Fig.**3 dargestellten, zur Oberkante des oberen Profils **13b** parallel ausgerichteten Laschen der Klemmelemente **29,31.** Die erste Klemmeinheit **17** besteht in dieser Ausführungsform aus dem Klemmelement **33** und den Verdrängungselementen **27a,27b.**

Die Klemmung der Profile **13a,13b** erfolgt wie für die in **Fig.** 3a-**Fig**. 3f dargestellte Ausführungsform beschrieben. Allerdings erfolgt die Klemmung durch die erste Klemmeinheit **17** dadurch, dass das Klemmelement **33** nach Betätigung des ersten Betätigungselements **35** von den Verdrängungselementen **27a,27b** so lange nach unten bewegt wird, bis sich ein Formschluss zwischen den Klemmbügeln und der oberen Fläche des oberen Profils **13b** sowie ein Formschluss zwischen der unteren Fläche des oberen Profils **13b** und den Verdrängungselementen **27a,27b** einstellt.

### Variante 4: Klemmmechanismus mit Exzenterklemmung

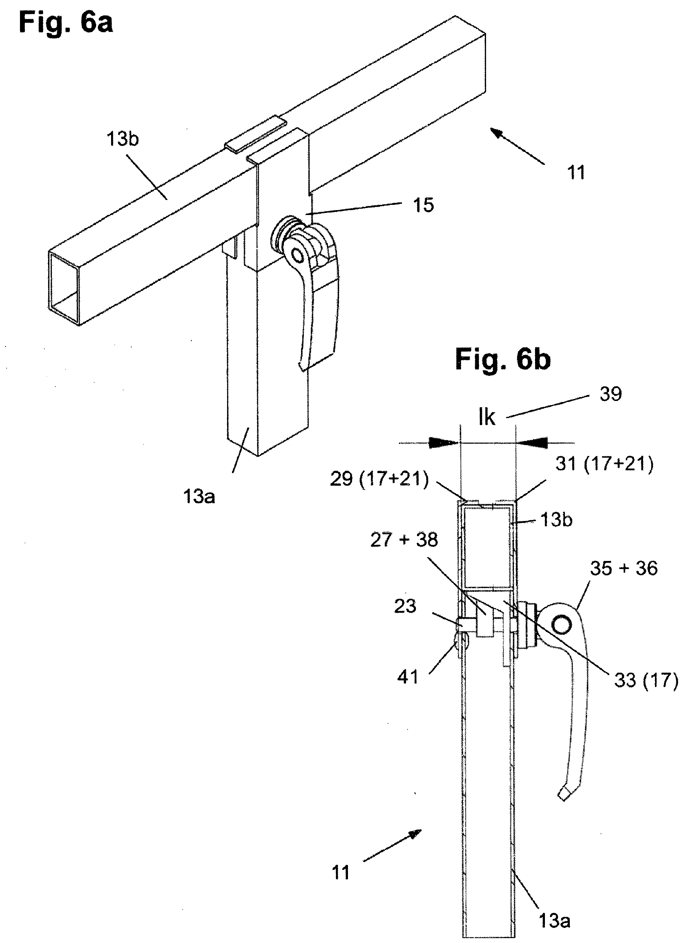

In den **Fig.** 6 a & b ist eine Variation der in der **Fig.** 3a-**Fig**. 3f dargestellte Ausführungsform des Klemmmechanismus **15** dargestellt, bei der die Klemmung in zwei Wirkrichtungen durch ein einziges erstes Betätigungselement **35** erfolgt.

Die zweite und die erste Klemmeinheit **17,21** bestehen zwar aus denselben Elementen, allerdings ist das Klemmelement **29** zusätzlich über ein Verbindungselement **41** formschlüssig mit dem unteren Profil **13a** verbunden. Das Verbindungselement ist so ausgeführt, dass nicht alle Freiheitsgrade des Klemmelements **29** eingeschränkt werden. Das erste Betätigungselement **35** ist als formschlüssig mit dem Verstellelement **23** verbundener Exzenterspanner ausgeführt.

Die Klemmung der Profile **13a,13b** erfolgt, wie für die in **Fig.** 3a-**Fig**. 3f dargestellten Ausführungsform beschrieben. Allerdings übernehmen das Verdrängungselement **27** und das erste Betätigungselement **35** die Funktion der Spannelemente **36,38** und nur eines der beiden Klemmelemente **31** ist beweglich gelagert.

Durch diese Ausgestaltung des Klemmmechanismus **15** kann der benötigte Bauraum reduziert und die Bedienung des Klemmmechanismus **15** vereinfacht werden.

### Variante 5: Klemmmechanismus zum Klemmen von Rundrohren mit zwei Klemmelementen

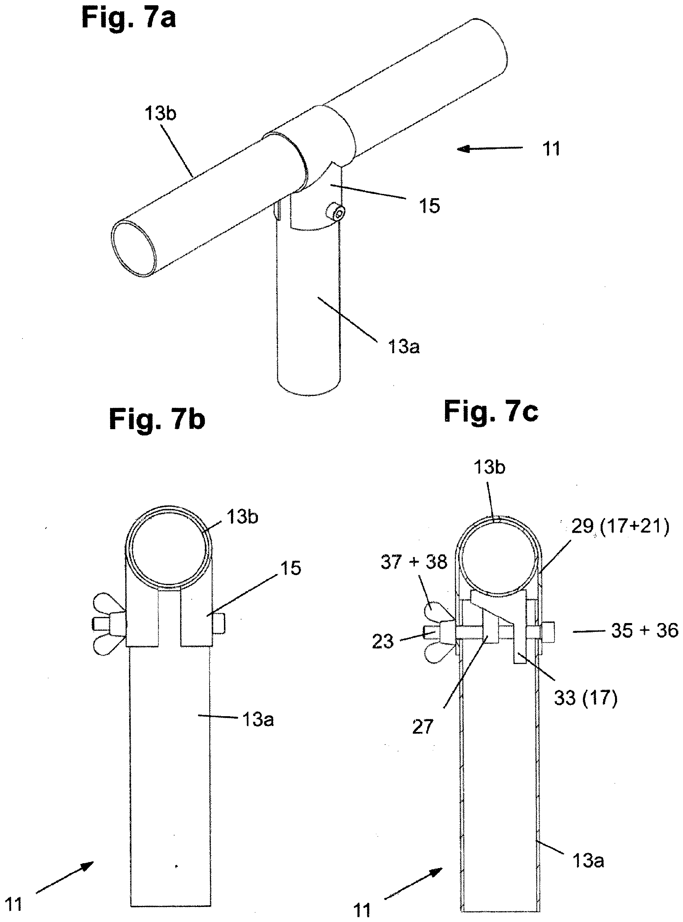

In der **Fig.** 7a -Fig. 7c ist eine Variation der in der **Fig.** 3a-**Fig**. 3f dargestellten Ausführungsform des Klemmmechanismus **15** dargestellt, bei der die Profile **13a,13b** als runde Hohlprofile ausgeformt sind und die zweite Klemmeinheit **21** nur aus einem Klemmelement **29** besteht.

Das Klemmelement **29** weist eine an eine äußere Form des oberen Profils **13b** angepasste Ausnehmung auf und das erste Betätigungselement **35** ist als formschlüssig mit dem Verstellelement **23** verbundener Schraubenkopf mit Innensechskant ausgeführt.

Die Klemmung der Profile **13a,13b** erfolgt wie für die in **Fig.** 3a-**Fig**. 3f dargestellte Ausführungsform beschrieben. Allerdings wird beim Klemmen in die erste Wirkrichtung **19** das über die Schrägflächen mit dem Verdrängungselement **27** in Verbindung stehende Klemmelement **33** entlang der ersten Wirkrichtung **19** so lange nach oben verdrängt, bis sich ein Formschluss zwischen der Innenfläche des Klemmelements **33** und der Mantelfläche des oberen Profils **13b** sowie ein Formschluss zwischen der oberen Fläche des Klemmelements **33** und der Mantelfläche des oberen Profils **13b** einstellt.

Die Klemmung der Profile **13a,13b** in eine zweite Wirkrichtung **20** erfolgt durch Betätigung des, als Flügelmutter ausgeformten, zweiten Betätigungselements **37.** Dadurch wird der Abstand zwischen den, in dieser Ausführungsform den Betätigungselementen **35,37** entsprechenden, Spannelementen **36,38** verringert und das Klemmelement **29** mechanisch solange, vorzugsweise elastisch, verformt, bis es zu einem Formschluss zwischen der Innenfläche des Klemmelements **29** und der Mantelfläche der Profile **13a,13b** kommt.

Durch diese Ausgestaltung des Klemmmechanismus **15** können Rundrohre miteinander verbunden und die Anzahl der an der Klemmung beteiligten Bauteile vermindert werden.

### Bezugszeichenliste

- 11: Gestell
- 12: Fortbewegungsmittel
- 13: Profil
- 15: Klemmmechanismus
- 17: erste Klemmeinheit
- 19: erste Wirkrichtung
- 20: zweite Wirkrichtung
- 21: zweite Klemmeinheit
- 23: Verstellelement
- 25: Umlenkeinheit
- 27: Verdrängungselement
- 29: Klemmelement
- 31: Klemmelement
- 33: Klemmelement
- 35: erstes Betätigungselement
- 36: erstes Spannelement
- 37: zweites Betätigungselement
- 38: zweites Spannelement
- 39: Abstand zwischen den Spannelementen
- 41: Verbindungselement

## Patentansprüche

1. Gestell (**11**), insbesondere zur Installation in einem Fortbewegungsmittel (**12**), mit mehreren Profilen (**13**) und zumindest einem Klemmmechanismus (**15**) zum Klemmen von zumindest einem der Profile (**13**),
wobei der Klemmmechanismus (**15**) eine erste Klemmeinheit (**17**) zur Klemmung des zumindest einen Profils (**13**) in einer ersten Wirkrichtung (**19**) umfasst und eine zweite Klemmeinheit (**21**) zur Klemmung des zumindest einen Profils (**13**) in einer, schräg, insbesondere senkrecht, zur ersten Wirkrichtung (**19**) ausgerichteten, zweiten Wirkrichtung (**20**) umfasst,
wobei die erste Klemmeinheit (**17**) und die zweite Klemmeinheit (**21**) jeweils zwischen einer Klemmstellung und einer Freigabestellung verstellbar sind, und
wobei der Klemmmechanismus (**15**) ein Verstellelement (**23**) umfasst, über das die erste Klemmeinheit (**17**) und die zweite Klemmeinheit (**21**) in ihre jeweilige Klemmstellung verstellbar sind.

2. Gestell (**11**) nach Anspruch 1,
wobei das Verstellelement (**23**) eine axiale Haupterstreckungsrichtung aufweist, welche in Richtung der zweiten Wirkrichtung (**20**) ausgerichtet ist.

3. Gestell (**11**) nach Anspruch 1 oder 2,
wobei der Klemmmechanismus (**15**) eine Umlenkeinheit (**25**) umfasst, welche eine Bewegung des Verstellelements (**23**) in eine Bewegung in Richtung der ersten Wirkrichtung (**19**) umwandelt.

4. Gestell (**11**) nach einem der vorherigen Ansprüche,
wobei das Verstellelement (**23**) zumindest ein Gewinde, insbesondere Außengewinde, aufweist und das Gewinde mit einem korrespondierenden Gewinde, insbesondere Innengewinde, zumindest eines Verdrängungselements (**27**) formschlüssig in Eingriff steht.

5. Gestell (**11**) nach Anspruch 4,
wobei das Verdrängungselement (**27**) mit einem Klemmelement (**33**) in Wirkverbindung steht und wobei durch eine Bewegung des Verdrängungselements (**27**) entlang einer axialen Haupterstreckungsrichtung des Verstellelements (**23**) das Klemmelement (**33**) in Richtung der ersten Wirkrichtung (**19**) bewegbar ist.

6. Gestell (**11**) nach Anspruch 5,
wobei das Verdrängungselement (**27**) eine erste Schrägfläche aufweist,
wobei das Klemmelement (**33**) eine zweite Schrägfläche aufweist,
und wobei die erste Schrägfläche und zweite Schrägfläche derart angeordnet sind, dass die erste Schrägfläche und die zweite Schrägfläche aufeinander abgleiten, während das Klemmelement in Richtung der ersten Wirkrichtung (**19**) bewegt wird.

7. Gestell (**11**) nach einem der vorherigen Ansprüche,
wobei das Verstellelement (**23**) mittels eines ersten Betätigungselements (**35**) bewegbar, insbesondere rotierbar, ist, um die erste Klemmeinheit (**17**) in ihre Klemmstellung zu verstellen
und wobei entweder das erste Betätigungselement (**35**) oder ein zweites Betätigungselement (**37**) relativ zu dem Verstellelement (**23**) bewegbar ist, um die zweite Klemmeinheit (**21**) in ihre Klemmstellung zu verstellen.

8. Gestell (**11**) nach einem der vorherigen Ansprüche,
wobei der Klemmmechanismus (**15**) insbesondere zwei Spannelemente **(36,38)** aufweist, deren Abstand vorzugsweise über eine Mutter oder einen Exzenter reduzierbar ist, um die zweite Klemmeinheit (**21**) in ihre Klemmstellung zu versetzen.

9. Gestell (**11**) nach einem der vorherigen Ansprüche,
wobei die zweite Klemmeinheit (**21**) zumindest ein Klemmelement (**29**), insbesondere genau zwei separate Klemmelemente (**29,31**) aufweist.

10. Verfahren zum Verbinden von zumindest zwei Profilen (**13**) mittels eines Klemmmechanismus (**15**), insbesondere mittels eines Klemmmechanismus (**15**) nach einem der vorherigen Ansprüche, mit den Schritten:
- Einlegen des zumindest einen Profils (**13**) in den Klemmmechanismus (**15**),
- Verstellen einer ersten Klemmeinheit (**17**) mittels eines Verstellelements (**23**), um das zumindest eine Profil (**13**) in einer ersten Wirkrichtung (**19**) zu klemmen, und
- Reduktion des Abstands von mit dem Verstellelement (**23**) verbundenen Spannelementen (**36,38**), um das zumindest eine Profil (**13**) mittels einer zweiten Klemmeinheit (**21**) entlang einer zweiten schräg, insbesondere senkrecht, zu der ersten Wirkrichtung (**19**) angeordneten, zweiten Wirkrichtung (**20**) zu klemmen.

11. Verfahren nach Anspruch 10,
wobei das Verstellelement (**23**) ein Gewinde, insbesondere Außengewinde aufweist, und wobei das Verstellen der ersten Klemmeinheit (**17**) ein Rotieren des Verstellelements (**23**) umfasst.

12. Verfahren nach Anspruch 10 oder 11,
wobei das Verstellelement (**23**) zumindest ein Gewinde, insbesondere Außengewinde, aufweist und das Gewinde mit einem korrespondierenden Gewinde, insbesondere Innengewinde, zumindest eines Verdrängungselements (**27**) formschlüssig in Eingriff steht und wobei das Verstellen der ersten Klemmeinheit (**17**) ein Drehen des Verstellelements (**23**) um seine Längsachse und ein dadurch induziertes Bewegen des Verdrängungselements (**27**) entlang der axialen Haupterstreckungsrichtung des Verstellelements (**23**) umfasst.

13. Verfahren nach Anspruch 12,
wobei das Bewegen des Verdrängungselements (**27**) entlang der axialen Haupterstreckungsrichtung des Verstellelements (**23**) eine Bewegung eines Klemmelements (**33**) in Richtung der ersten Wirkrichtung (**19**) bewirkt.

14. Verfahren nach einem der vorherigen Verfahrensansprüche,
wobei das Verstellen der ersten Klemmeinheit (**17**), um die erste Klemmeinheit (**17**) in ihre Klemmstellung zu verstellen, ein Bewegen, insbesondere Rotieren, des Verstellelements (**23**) mittels eines ersten Betätigungselements (**35**) umfasst,
und wobei der Abstand der Spannelemente (**36,38**) durch eine Bewegung des ersten Betätigungselements (**35**) oder eines zweiten Betätigungselements (**37**) verkürzt wird, um die zweite Klemmeinheit (**21**) in ihre Klemmstellung zu verstellen.

15. Verfahren nach einem der vorherigen Ansprüche,
wobei die Reduktion des Abstands der Spannelemente **(36,38)** über eine Rotation einer Mutter oder ein Verschwenken eines Exzenters durchgeführt wird.

## Claims

1. A frame (**11**), in particular for installation in a means of transport (**12**), comprising a plurality of profiles (**13**) and at least one clamping mechanism (**15**) for clamping at least one of the profiles (**13**),
wherein the clamping mechanism (**15**) comprises a first clamping unit (**17**) for clamping the at least one profile (**13**) in a first acting direction (**19**), and comprises a second clamping unit (**21**) for clamping the at least one profile (**13**) in a second acting direction (**20**) oriented obliquely, in particular perpendicularly, to the first acting direction (**19**),
wherein the first clamping unit (**17**) and the second clamping unit (**21**) are each adjustable between a clamping position and a release position, and
wherein the clamping mechanism (**15**) comprises an adjustment element (**23**), by means of which the first clamping unit (**17**) and the second clamping unit (**21**) are adjustable into their respective clamping position.

2. The frame (**11**) according to claim 1,
wherein the adjustment element (**23**) has an axial main direction of extension which is oriented in the direction of the second acting direction (**20**).

3. The frame (**11**) according to claim 1 or 2,
wherein the clamping mechanism (**15**) comprises a deflection unit (**25**) which converts a movement of the adjustment element (**23**) into a movement in the direction of the first acting direction (**19**).

4. The frame (**11**) according to any one of the preceding claims,
wherein the adjustment element (**23**) has at least one thread, in particular an external thread, and the thread is in form-fitting engagement with a corresponding thread, in particular an internal thread, of at least one displacement element (**27**).

5. The frame (**11**) according to claim 4,
wherein the displacement element (**27**) is operatively connected to a clamping element (**33**), and wherein, by a movement of the displacement element (**27**) along an axial main direction of extension of the adjustment element (**23**), the clamping element (**33**) is movable in the direction of the first acting direction (**19**).

6. The frame (**11**) according to claim 5,
wherein the displacement element (**27**) has a first inclined surface,
wherein the clamping element (**33**) has a second inclined surface,
and wherein the first inclined surface and the second inclined surface are arranged such that the first inclined surface and the second inclined surface slide on one another while the clamping element is moved in the direction of the first acting direction (**19**).

7. The frame (**11**) according to any one of the preceding claims,
wherein the adjustment element (**23**) is movable, in particular rotatable, by means of a first actuation element (**35**) in order to adjust the first clamping unit (**17**) into its clamping position,
and wherein either the first actuation element (**35**) or a second actuation element (**37**) is movable relative to the adjustment element (**23**) in order to adjust the second clamping unit (**21**) into its clamping position.

8. The frame (**11**) according to any one of the preceding claims,
wherein the clamping mechanism (**15**) has, in particular, two tensioning elements (**36**, **38**), the distance between which is preferably reducible by means of a nut or an eccentric in order to place the second clamping unit (**21**) into its clamping position.

9. The frame (**11**) according to any one of the preceding claims,
wherein the second clamping unit (**21**) has at least one clamping element (**29**), in particular exactly two separate clamping elements (**29, 31**).

10. A method for connecting at least two profiles (**13**) by means of a clamping mechanism (**15**), in particular by means of a clamping mechanism (**15**) according to any one of the preceding claims, comprising the steps of:
- inserting the at least one profile (**13**) into the clamping mechanism (**15**),
- adjusting a first clamping unit (**17**) by means of an adjustment element (**23**) in order to clamp the at least one profile (**13**) in a first acting direction (**19**), and
- reducing the distance between tensioning elements (**36, 38**) connected to the adjustment element (**23**) in order to clamp the at least one profile (**13**) by means of a second clamping unit (**21**) along a second acting direction (**20**) arranged obliquely, in particular perpendicularly, to the first acting direction (**19**).

11. The method according to claim 10,
wherein the adjustment element (**23**) has a thread, in particular an external thread, and wherein the adjustment of the first clamping unit (**17**) comprises rotating the adjustment element (**23**).

12. The method according to claim 10 or 11,
wherein the adjustment element (**23**) has at least one thread, in particular an external thread, and the thread is in form-fitting engagement with a corresponding thread, in particular an internal thread, of at least one displacement element (**27**), and wherein the adjustment of the first clamping unit (**17**) comprises rotating the adjustment element (**23**) about its longitudinal axis and thereby inducing movement of the displacement element (**27**) along the axial main direction of extension of the adjustment element (**23**).

13. The method according to claim 12,
wherein the movement of the displacement element (**27**) along the axial main direction of extension of the adjustment element (**23**) causes movement of a clamping element (**33**) in the direction of the first acting direction (**19**).

14. The method according to any one of the preceding method claims,
wherein the adjustment of the first clamping unit (**17**), in order to adjust the first clamping unit (**17**) into its clamping position, comprises moving, in particular rotating, the adjustment element (**23**) by means of a first actuation element (**35**),
and wherein the distance between the tensioning elements (**36, 38**) is shortened by a movement of the first actuation element (**35**) or of a second actuation element (**37**) in order to adjust the second clamping unit (**21**) into its clamping position.

15. The method according to any one of the preceding claims,
wherein the reduction of the distance between the tensioning elements (**36, 38**) is carried out by rotating a nut or by pivoting an eccentric.

## Revendications

1. Bâti (**11**), en particulier destiné à être installé dans un moyen de transport (**12**), comprenant plusieurs profilés (**13**) et au moins un mécanisme de serrage (**15**) pour serrer au moins l'un des profilés (1**3**),
dans lequel le mécanisme de serrage (**15**) comprend une première unité de serrage (**17**) pour serrer l'au moins un profilé (**13**) dans une première direction d'action (**19**), et comprend une seconde unité de serrage (**21**) pour serrer l'au moins un profilé (**13**) dans une seconde direction d'action (**20**) orientée obliquement, en particulier perpendiculairement, par rapport à la première direction d'action (**19**),
dans lequel la première unité de serrage (**17**) et la seconde unité de serrage (**21**) sont chacune réglables entre une position de serrage et une position de libération, et
dans lequel le mécanisme de serrage (**15**) comprend un élément de réglage (**23**), par l'intermédiaire duquel la première unité de serrage (**17**) et la seconde unité de serrage (**21**) sont réglables dans leur position de serrage respective.

2. Bâti (**11**) selon la revendication 1,
dans lequel l'élément de réglage (**23**) présente une direction principale d'extension axiale qui est orientée dans la direction de la seconde direction d'action (**20**).

3. Bâti (**11**) selon la revendication 1 ou 2,
dans lequel le mécanisme de serrage (**15**) comprend une unité de renvoi (**25**), laquelle convertit un mouvement de l'élément de réglage (**23**) en un mouvement dans la direction de la première direction d'action (**19**).

4. Bâti (**11**) selon l'une quelconque des revendications précédentes,
dans lequel l'élément de réglage (**23**) présente au moins un filetage, en particulier un filetage extérieur, et le filetage est en prise par complémentarité de forme avec un filetage correspondant, en particulier un filetage intérieur, d'au moins un élément de déplacement (**27**).

5. Bâti (**11**) selon la revendication 4,
dans lequel l'élément de déplacement (**27**) est en liaison fonctionnelle avec un élément de serrage (**33**), et dans lequel, par un mouvement de l'élément de déplacement (**27**) le long d'une direction principale d'extension axiale de l'élément de réglage (**23**), l'élément de serrage (**33**) peut être déplacé dans la direction de la première direction d'action (**19**).

6. Bâti (**11**) selon la revendication 5,
dans lequel l'élément de déplacement (**27**) présente une première surface inclinée,
dans lequel l'élément de serrage (**33**) présente une seconde surface inclinée,
et dans lequel la première surface inclinée et la seconde surface inclinée sont agencées de telle sorte que la première surface inclinée et la seconde surface inclinée glissent l'une sur l'autre pendant que l'élément de serrage est déplacé dans la direction de la première direction d'action (**19**).

7. Bâti (**11**) selon l'une quelconque des revendications précédentes,
dans lequel l'élément de réglage (**23**) peut être déplacé, en particulier tourné, au moyen d'un premier élément d'actionnement (**35**) afin de régler la première unité de serrage (**17**) dans sa position de serrage,
et dans lequel soit le premier élément d'actionnement (**35**), soit un second élément d'actionnement (**37**), peut être déplacé par rapport à l'élément de réglage (**23**) afin de régler la seconde unité de serrage (**21**) dans sa position de serrage.

8. Bâti (**11**) selon l'une quelconque des revendications précédentes,
dans lequel le mécanisme de serrage (**15**) présente en particulier deux éléments de tension (**36, 38**), dont l'écartement peut de préférence être réduit au moyen d'un écrou ou d'un excentrique afin d'amener la seconde unité de serrage (**21**) dans sa position de serrage.

9. Bâti (**11**) selon l'une quelconque des revendications précédentes,
dans lequel la seconde unité de serrage (**21**) présente au moins un élément de serrage (**29**), en particulier exactement deux éléments de serrage séparés (**29, 31**).

10. Procédé de liaison d'au moins deux profilés (**13**) au moyen d'un mécanisme de serrage (**15**), en particulier au moyen d'un mécanisme de serrage (**15**) selon l'une quelconque des revendications précédentes, comprenant les étapes consistant à :
- insérer l'au moins un profilé (**13**) dans le mécanisme de serrage (**15**),
- régler une première unité de serrage (**17**) au moyen d'un élément de réglage (**23**), afin de serrer l'au moins un profilé (**13**) dans une première direction d'action (**19**), et
- réduire l'écartement d'éléments de tension (**36, 38**) reliés à l'élément de réglage (**23**), afin de serrer l'au moins un profilé (**13**) au moyen d'une seconde unité de serrage (**21**) le long d'une seconde direction d'action (**20**) agencée obliquement, en particulier perpendiculairement, par rapport à la première direction d'action (**19**).

11. Procédé selon la revendication 10,
dans lequel l'élément de réglage (**23**) présente un filetage, en particulier un filetage extérieur, et dans lequel le réglage de la première unité de serrage (**17**) comprend une rotation de l'élément de réglage (**23**).

12. Procédé selon la revendication 10 ou 11,
dans lequel l'élément de réglage (**23**) présente au moins un filetage, en particulier un filetage extérieur, et le filetage est en prise par complémentarité de forme avec un filetage correspondant, en particulier un filetage intérieur, d'au moins un élément de déplacement (**27**), et dans lequel le réglage de la première unité de serrage (**17**) comprend une rotation de l'élément de réglage (**23**) autour de son axe longitudinal et un déplacement ainsi induit de l'élément de déplacement (**27**) le long de la direction principale d'extension axiale de l'élément de réglage (**23**).

13. Procédé selon la revendication 12,
dans lequel le déplacement de l'élément de déplacement (**27**) le long de la direction principale d'extension axiale de l'élément de réglage (**23**) provoque un mouvement d'un élément de serrage (**33**) dans la direction de la première direction d'action (**19**).

14. Procédé selon l'une quelconque des revendications de procédé précédentes,
dans lequel le réglage de la première unité de serrage (**17**), afin de régler la première unité de serrage (**17**) dans sa position de serrage, comprend un déplacement, en particulier une rotation, de l'élément de réglage (**23**) au moyen d'un premier élément d'actionnement (**35**),
et dans lequel l'écartement des éléments de tension (**36, 38**) est raccourci par un mouvement du premier élément d'actionnement (**35**) ou d'un second élément d'actionnement (**37**), afin de régler la seconde unité de serrage (**21**) dans sa position de serrage.

15. Procédé selon l'une quelconque des revendications précédentes,
dans lequel la réduction de l'écartement des éléments de tension (**36, 38**) est réalisée par une rotation d'un écrou ou par un pivotement d'un excentrique.
